# EUROPEAN PATENT APPLICATION

(11) **EP 1 543 733 A1**
(43) Date of publication of application: **22.06.2005**
(21) Application number: 03425805.3
(22) Date of filing: 17.12.2003
(51) Int. Cl.: A23L 1/237

(54) **Manufacture of liquid edible salt**

(71) Applicant: La Perla S.r.l., 58022 Follonica GR (IT)
(72) Inventor: Landini, Alcide, 58022 Follonica GR (IT); Garcia, Maria Fernanda, 58022 Follonica GR (IT)
(74) Representative: Celestino, Marco

(57) **Abstract**

A process to prepare an edible liquid salt containing organic substances of biologic origin provides the extraction of seawater (101), which is subject to a preliminary filtration (102) for removing macroscopic substances such as algae and sand that can affect the correct operation of the apparatus used in the process. The filtered sea solution is then supplied to a vacuum evaporator (103), which works at a pressure lower that atmospheric, where a desired concentration is reached by boiling with consequent evaporation of the water surplus, until the concentration of sodium chloride (NaCl) is about 25%, which corresponds to a concentration of 9.8% in weight of sodium. The sea solution is then lead to a battery of filters (104) to purify further the final product by removing organic and inorganic substances with size higher than the substances of interest. The refined product is eventually sent to a bottling station (105).

## Description

### Field of the invention

The present invention relates to a process to prepare an edible liquid salt containing organic substances of biologic origin starting from seawater.

### Background of the invention

As known, many treatment processes exist of seawater either for obtaining substantially pure sodium chloride or to desalinate seawater for obtaining pure water. A first process to obtain sodium chloride provides the exposure to sunrays of a large amount of seawater contained in large basins, requiring long time for achieving a desired concentration.

The process above described, as well as the processes known for concentrating or desalinating seawater, cause the degradation of some organic substances contained in the sea solution or their removal from the final product. Among these organic substances there are some of biologic origin that are very important because have some beneficial effects. In particular, a part of plancton with size between 0.2 and 20 µm, i.e. picoplancton, ultraplancton and nanoplancton, are beneficial if eaten.

These organic substances, in the processes of prior art, are altered or decomposed owing to long exposition to the sun light UV radiation, or owing to extreme conditions, for example very high pressure (70-80 atmospheres), as occurs in inverse osmosis processes.

Systems are known, furthermore, for concentrating seawater at atmospheric pressure. A system of this type is described in US6048569 relating to a process to obtain a saline solution with a concentration of sodium chloride about 25%. The document does not refer to the operative conditions of the process even if it is apparent that the pressure is atmospheric. This entails that the working temperature is high, irrespective of the heating source used. If the process provides heating the water contained in large basins with sun energy, a relatively long time of exposition to UV radiation occurs. For these reasons, the operative conditions of the process are critic for survival of organic substances present in the starting sea solution, which are thus subject to degradation.

### Summary of the invention

It is, therefore, a feature of the present invention to provide a process to prepare a liquid kitchen salt that is neither chemically nor physically aggressive and that assures to maintain ideal conditions for survival of organic components thereof without any alterations.

It is a further feature of the present invention to provide such a process that allows to obtain a liquid kitchen salt with a strong perception of salty taste, notwithstanding a low content of sodium chloride, suitable for people with pathologies such as blood hypertension, kidney diseases, etc.

These and other features are accomplished with one exemplary process to prepare an edible liquid salt containing organic substances of biologic origin, according to the present invention, comprising the steps of:
- extracting a sea solution and pumping it at a treatment site;
- preliminarily filtering the sea solution for removing organic and inorganic substances with macroscopic size such as sand, algae;
- feeding the sea solution to a reservoir;
- evaporating a measured amount of the sea solution present in the reservoir up to achieving a predetermined concentration;
- refining filtration of the sea concentrated solution for removing organic and inorganic substances with size higher than organic substances of interest;
- feeding the product obtained to a storage tank;
- bottling the product taking it from the storage tank;

whose main feature is that said reservoir is in pneumatic connection with a vacuum suction system and that said evaporating step is carried at a pressure less than atmospheric.

In particular, at the end of the evaporating step the concentration of the sodium chloride (NaCl) in the sea solution is about 25% corresponding to a concentration of about 9.8% of sodium ions.

Advantageously, the heating means comprises a coil exchanger crossed by a heating fluid. This way, a necessary amount is supplied of heat for evaporating under vacuum the amount of sea solution to obtain a desired concentration.

Preferably, the evaporating process under vacuum is carried out at a working pressure set between 30 and 60 mmHg corresponding to a working temperature set between 35 and 45°C. This way the process is not aggressive, obtaining optimal conditions of survival of the organic substances of interest, in particular picoplancton, ultraplancton and part of nanoplancton, which then are not subject to any type of alteration of the original structure.

In an exemplary embodiment of the invention the evaporating step under vacuum of the sea solution is made by a single evaporator in pneumatic connection with a vacuum suction system.

Alternatively, the evaporation under vacuum is carried out by multiple effect evaporators, i.e., a plurality of evaporators in fluidodynamic connection with one another, the last of the evaporators being in pneumatic connection with a vacuum suction system. In particular, in a first evaporator the water is evaporated and the vapour obtained is used for exchanging heat of condensation in a next evaporator, which is fed with the solution coming from the first. This is possible because the second evaporator has a working pressure less than the first. The process is repeated for a certain number of evaporators up to obtaining a desired concentration of the sea solution with high precision.

In particular, the refining filtration of the sea solution is made by at least one filter with a mesh size to allow removal of the organic and inorganic substances with size higher than picoplancton, ultraplancton and part of nanoplancton.

In case a row of filters is used, the last filter has mesh size of 5 µm in such a way that while the microplancton, the mesoplancton and other impurities are captured and removed, the picoplancton, the ultraplancton and part of nanoplancton remain in the final product with the beneficial effects for who eats them.

Before the bottling step the sea solution can be subject to a step of sterilisation using UV light. This step has a short duration for not affecting the picoplancton, ultraplancton and part of nanoplancton.

Furthermore, a further step can be provided where the evaporated water is condensed for making demineralised water.

Advantageously, preliminarily to the evaporation under vacuum of the sea solution a preheating step is provided suitable for reducing the amount of heat to provide by the heating means to reach the desired concentration of the sea solution.

### Brief description of the drawings

Further characteristics and the advantages of the process to prepare an edible liquid salt containing organic substances of biologic origin, according to the invention, will be made clearer with the following description of an exemplary embodiment thereof, exemplifying but not limitative, with reference to the attached drawings, in which like reference characters designate the same or similar parts, throughout the figures of which:
- figure 1 shows diagrammatically in a block diagram the various steps through which the process is carried out to prepare an edible liquid salt containing organic substances of biologic origin, according to the invention;
- figure 2 shows diagrammatically a possible layout scheme for carrying out the process shown in the block diagram of figure 1;
- figure 3 shows diagrammatically a layout scheme alternative to that of figure 2;
- figure 4 shows diagrammatically a further layout scheme alternative to that of figure 2.

### Description of a preferred exemplary embodiment

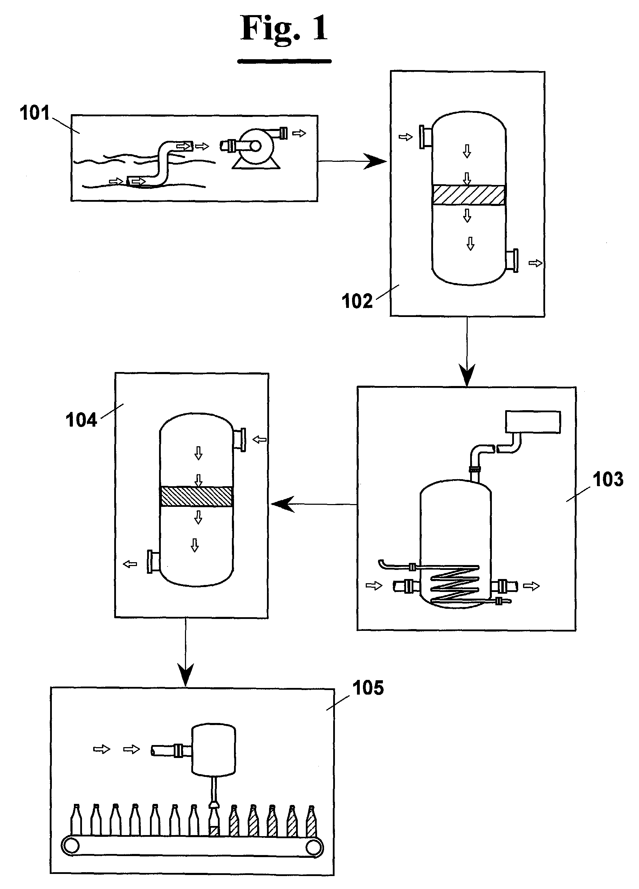

In figure 1 a block diagram is shown of a possible succession of steps through which the process, according to the invention, can be carried out to prepare an edible liquid salt containing organic substances of biologic origin. The process begins with the extraction, block 101, of seawater, hereinafter said sea solution. The sea solution is subject to a preliminary filtration, block 102, for removing macroscopic substances such as algae and sand that can affect the correct operation of the apparatus used in the process. The sea solution, then, is supplied to a vacuum evaporator, block 103, which obtains a desired concentration by boiling with consequent evaporation of the water surplus. In particular, at the end of evaporation the solution extracted from the evaporator has a concentration of sodium chloride (NaCl) about 25%, which corresponds to a concentration of 9.8% in weight of sodium. The sea solution is then lead to a battery of filters, block 104, to purify further the final product by removing organic and inorganic substances with size higher than the substances of interest. The refined product is eventually sent to a bottling station, block 105.

In figures from 2 to 4 the process is then shown in a more detailed way by means of some layout schemes.

As said above, the sea solution 71 is extracted from a pump 20 and given to a filter 40 with mesh size about 40 µm for removing macroscopic substances such as sand, algae. The filtered sea solution is then lead to a vacuum evaporation section, enclosed in a dotted rectangle 15. In particular, the vacuum evaporation section is shown in different embodiments in the various layout schemes of figures from 2 to 4. The evaporation is carried out under vacuum and preferably at a working pressure set between 30 and 60 mmHg at a temperature range between 35 and 45°C. This way, the process is not compel and allows optimal conditions of survival for the organic substances of interest, in particular picoplancton, ultraplancton and part of nanoplancton, which then are not subject to any type of alteration of the original structure.

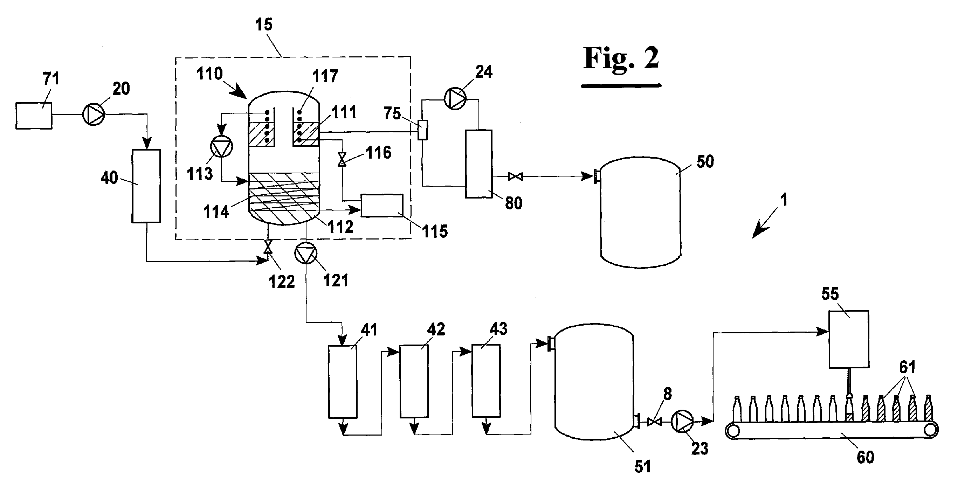

More in detail, in figure 2 the vacuum evaporation section 15 provides an evaporator in which a certain vacuum rate is reached by a pump 24. Evaporator 110 is then associated to a heat pump comprising a compressor 113 operated electrically that compresses the refrigerating gas, which heats up to about 60-70°C. The compressed gas is eventually sent to a coil exchanger 114 through which it releases heat to the sea solution present in boiling chamber 112, causing it to boil and causing a certain amount of water to evaporate. Once heat has been transferred through coil exchanger 114 the gas passes through an exchanger 115 for being cooled further and then expanded in an expansion valve 116. The gas while expanding gets cooler and passes through a coil exchanger 117 located at the chamber of condensation 111 where it subtracts heat to the vapour coming from the evaporation chamber that condensates back to liquid. The condensed water is sucked to an ejector 75 and sent to a reservoir of the distilled 80 and then to a storage reservoir 50.

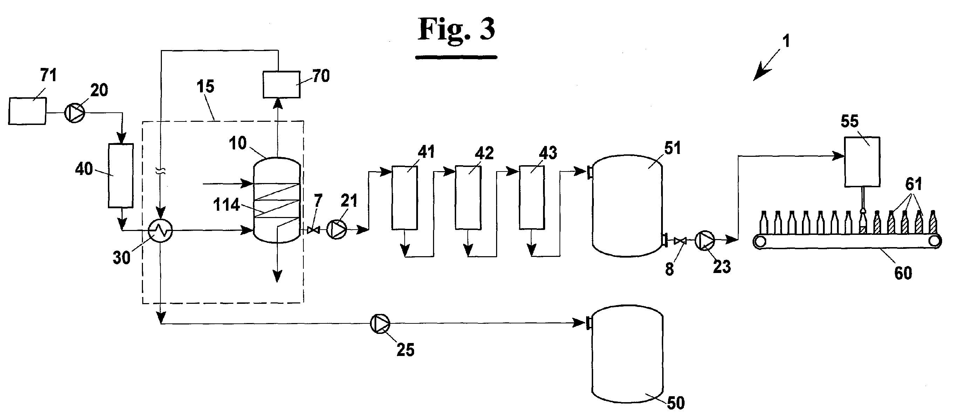

In the case of figure 3 the vacuum evaporation section 15 comprises, instead, a single effect evaporator 10 in pneumatic communication with a vacuum suction system 70. Before reaching the vacuum evaporator 10 the saline solution is preheated in an exchanger 30 exploiting the residual heat of the water condensed in the vacuum suction system 70. The evaporation of the saline solution in the vacuum evaporator 10 is carried out using a coil exchanger 114. The condensed water after the exchanger 30 gets cooler and can be sent to a storage reservoir 50 of demineralised water.

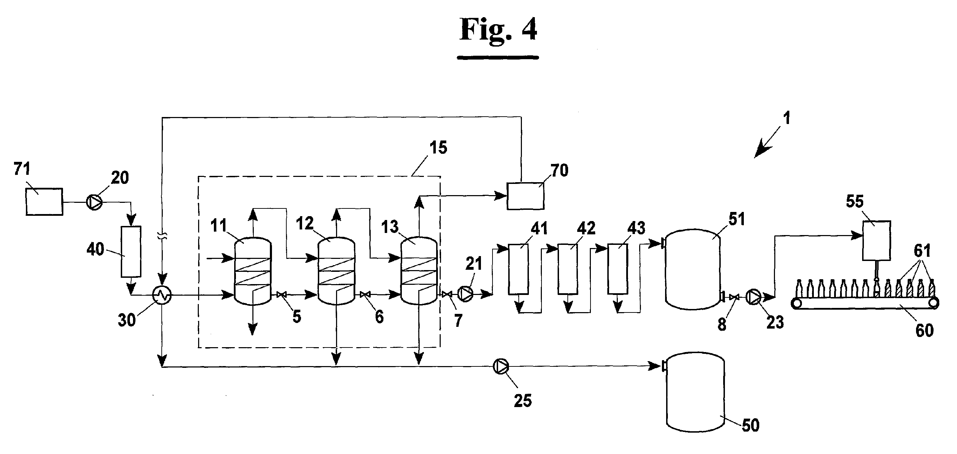

In the layout scheme of figure 4, the vacuum evaporation section 15 provides multiple effect evaporators, for example three evaporators 11, 12 and 13 hydraulically connected, the latter being in pneumatic connection with the vacuum suction system 70. Even in this case a preheating step of the saline solution is provided in an exchanger 30 for reducing the amount of heat necessary for evaporation of the water surplus in the vacuum evaporation section 15. In all the cases above described the saline solution at the outlet of the vacuum evaporation section 15 has a concentration of NaCl about 25% corresponding to a concentration of sodium of 9.8%. This sodium concentration on one hand allows obtaining a final product where the perception of salty taste is high, on the other hand this concentration is not high and makes then the final product good also for people with cardiovascular diseases, such as blood hypertension. The concentrated solution is then lead to a battery of filters in series for refining further the product removing the organic and inorganic substances with size higher than the substances of interest. More in detail, the first filter has mesh size about 20 µm, the second filter of about 10 µm and the last of 5 µm. Therefore, the organic substances that remain in solution in the product comprise picoplancton, ultraplancton and part of nanoplancton that has beneficial effects on whom takes them. After sterilisation of the final product by means of UV light is bottling of the same is carried out in a suitable station 55. Sterilisation lasts a short time to avoid degradation of picoplancton, ultraplancton and part of nanoplancton.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Process to prepare an edible liquid salt containing organic substances of biologic origin comprising the steps of:
- extracting a sea solution and pumping it at a treatment site;
- preliminarily treating the sea solution for removing organic and inorganic substances with macroscopic size such as sand, algae;
- feeding the sea solution to a reservoir;
- evaporating a measured amount of the sea solution present in the reservoir up to achieving a predetermined concentration;
- refining filtration of the sea concentrated solution for removing organic and inorganic substances with size higher than organic substances of interest;
- feeding the product obtained to a storage tank;
- bottling the product taking it from the storage tank;
**characterised in that** said reservoir is in pneumatic connection with a vacuum suction system and that said evaporating step is carried at a pressure less than atmospheric.

2. Process, according to claim 1, wherein at the end of the evaporating step the concentration of the sodium chloride (NaCl) in the sea solution is about 25% corresponding to a concentration of about 9.8% of sodium ions.

3. Process, according to claim 1, wherein said heating means comprises a coil exchanger crossed by a heating fluid.

4. Process, according to claim 1, wherein said evaporating process under vacuum is carried out at a working pressure set between 30 and 60 mmHg corresponding to a temperature range of evaporation set between 35 and 45°C.

5. Process, according to claim 1, wherein said evaporating step under vacuum of said sea solution is carried out by a single evaporator in pneumatic connection with a vacuum suction system.

6. Process, according to claim 1, wherein said evaporating step under vacuum is made of multiple effect evaporators, i.e., in a plurality of evaporators in hydraulic communication with each other, the last being in pneumatic connection with a vacuum suction system.

7. Process, according to claim 1, wherein said step of refining filtration of said sea solution is made by at least one filter with a mesh size suitable to allow removal of the organic and inorganic substances with size higher than picoplancton, ultraplancton and part of nanoplancton, wherein said step of refining filtration is made sending said sea solution to a first filter with mesh size 20 µm, a second filter with mesh size 10 µm and a last filter with mesh size 5 µm.

8. Process, according to claim 1, wherein said step of bottling is preceded by a step in which said sea solution is subject to sterilisation using UV light.

9. Process, according to claim 1, wherein a step is provided where the evaporated water is condensed for making demineralised water.

10. Process, according to claim 1, wherein preliminarily to said evaporating step under vacuum of said sea solution a preheating step is provided for reducing the amount of heat to provide by said heating means for reaching a desired concentration of said sea solution.
